# EUROPÄISCHE PATENTSCHRIFT

(11) **EP 0 811 528 B1**
(45) Veröffentlichungstag und Bekanntmachung des Hinweises auf die Patenterteilung: **21.05.2003**
(21) Anmeldenummer: 97103507.6
(22) Anmeldetag: 04.03.1997
(51) Int. Cl.: B60R 16/02

(54) **Ansteuereinrichtung**
Control installation
Installation de commande

(30) Priorität: 05.06.1996 DE 19622529
(43) Veröffentlichungstag der Anmeldung: 10.12.1997
(73) Patentinhaber: Siemens Aktiengesellschaft, 80333 München (DE)
(72) Erfinder: Michael, Uwe, 60385 Frankfurt am Main (DE)

(56) Entgegenhaltungen:
- FR-A- 2 726 411
- US-A- 5 079 759

## Beschreibung

Die Erfindung bezieht sich auf eine Ansteuereinrichtung zum Ansteuern elektrischer und/oder elektronischer Komponenten eines Kraftfahrzeugs, mit einer Zentralelektronik, der über einen Dateneingang eine Mehrzahl Daten zuleitbar sind, die in der Zentralelektronik verarbeitbar und von der über eine gemeinsame Leitung eine Mehrzahl von Komponenten Ansteuerdaten zuleitbar sind.

Bei einer Ansteuereinrichtung der eingangs genannten Art ist es bekannt, daß von der Zentralelektronik auf die gemeinsame Leitung in zyklischer Folge digitale Signale als binärcodierte Zahlen gegeben und die den jeweiligen als Anzeigemodule ausgebildeten Komponenten zugeordneten Daten in diese eingelesen, aufbereitet und mittels Anzeigeelementen zur Anzeige gebracht werden.

Aus der FR-A-2 726 411 ist eine Anstenereinrichtung mit den Merkmalen des Oberbegriffs vorn Anspruch 1 bekannt.

Aufgabe der Erfindung ist es, eine Ansteuereinrichtung der eingangs genannten Art zu schaffen, durch die mit geringstmöglichem Aufwand eine optimale Datenversorgung erzielt wird.

Diese Aufgabe wird erfindungsgemäß durch eine Ansteuereinrichtung mit den Merkmalen des Anspruchs 1 gelöst.

Im folgenden wird unter dem Begrift Datenbus eine Vorrichtung verstanden, die einen oder mehrere mit der Zentralelektronik (1) verbundene Hauptdatenbusse (20, 20') und mehrere mit jedem Hauptdatenbus (20, 20') jeweils über ein Gateway (21, 21') verbundene Nebendatenbusse (22, 22') aufweist.

Dadurch brauchen nur die Hauptdatenbusse eine hohe Leistungsfähigkeit besitzen, während die Nebendatenbusse auf kostengünstige Weise nur geringe Leistungsfähigkeit besitzen müssen.

Dazu ist vorzugsweise der Hauptdatenbus ein Datenbus höherer übertragbarer Datenrate als der Nebendatenbus.

Vorzugsweise ist dabei der Datenbus ein serieller Datenbus.

Besteht der Datenbus aus mindestens einer zweiadrigen Leitung, wovon eine Ader der Datenübertragung und deren andere Ader der Zuführung elektrischer Energie zu den Komponenten dient, so sind keine zusätzlichen Installationen für die Energieversorgung der Komponenten erforderlich.

Ist die Leitung eine flexible Leitung, so kann eine Standard-Ansteuereinrichtung problemlos bei verschiedenartigen Kraftfahrzeugen eingebaut werden.

Je nach Art der Komponenten können diese ein Empfangsteil zum Empfangen der Ansteuerdaten und/oder ein Sendeteil zum Senden der Ausgabedaten aufweisen.

Da durch den Datenbus auch Daten übertragbar sind, die für mehrere Komponenten bestimmt sind, ist es von Vorteil, wenn die Komponenten eine Schnittstelle zum Datenbus, eine Anpassungselektronik zum Aufbereiten der empfangenen Ansteuerdaten und einen Ansteuerteil zum Ansteuern einer anzusteuemden Einheit aufweisen.

Weist die Zentralelektronik eine Diagnoseschnittstelle auf, über die eine Fehler- bzw. Plausibilitätsprüfung der Zentralelektronik und/oder der Komponenten durchführbar ist, so ist auf einfache Weise eine Überprüfung sowohl der gesamten Ansteuereinrichtung als auch der einzelnen Komponenten möglich.

Vorteilhafterweise können die Komponenten Anzeigemodule sein, die als anzusteuemde Einheiten Anzeigeeinheiten besitzen, die z. B. optoelektronische Anzeigeeinheiten wie LCD's oder auch Zeigerinstrumente sein können.

Auch kann die anzusteuernde Einheit eine Lichtquelle zur Beleuchtung einer weiteren anzusteuernden Einheit der Komponente sein, wobei eine Komponente mehrere anzusteuernde Einheiten besitzt.

Die anzusteuernden Komponenten können der verschiedensten Art sein. So ist es möglich, daß die Komponenten manuell betätigbare Dateneingabeeinheiten, manuell und/oder durch Stelleinheiten betätigbare Schalter, Sensoren oder Beleuchtungseinheiten sein können.

Eine weitere Bauraum und Kosten sparende Ausbildung wird erreicht, wenn dem Dateneingang der Zentralelektronik die Daten mittels eines Datenbusses zuführbar sind.

Der Datenbus oder der Hauptdatenbus kann ein elektrisches Signal übertragbarer Bus sein.

Ist der Datenbus oder der Hauptdatenbus ein Lichtsignale übertragender Bus, wobei insbesondere der Lichtsignale übertragende Bus Lichtleiter als Übertragungsmedium aufweist, so sind keine elektromagnetischen Störbeeinflussungen der übertragenen Signale möglich.

Auführungsbeispiele der Erfindung sind in der Zeichnung dargestellt und werden im folgenden näher beschrieben. Es zeigen
- Figur 1: ein Blockschaltbild einer Ansteuereinrichtung, nicht zur Erfindung gehörig.
- Figur 2: ein Blockschaltbild eines Ausführungsbeispiels einer Ansteuereinrichtung,
- Figur 3: ein Blockschaltbild eines werden Ausführungsbeispiels einer Ansteuereinrichtung.

Bei allen Ausführungsbeispielen besitzt die Ansteuereinrichtung eine Zentralelektronik 1, die einen Mikrocomputer 2, ein Netzteil 3 zur Spannungsaufbereitung. Steckanschlüsse 4 sowie flüchtige und nichtflüchtige Speicher 5 aufweist.

Über Dateneingänge 6, von denen einer mit einem CAN-Bus verbunden ist sind der Zentralelektronik 1 eine Mehrzahl an Daten zuführbar. Diese Daten können z.B. von Sensoren erfaßte physikalische Größen sein. Aber auch andere Daten wie Zustandsdaten der verschiedensten Einrichtungen des Kraftfahrzeugs sind der Zentralelektronik 1 zuleitbar.

Weiterhin besitzt die Zentralelektronik 1 eine Diagnoseschnittstelle 7, über die extern eine Fehler- bzw. Plausibilitätsüberprüfung der Zentralelektronik 1 und gegebenenfalls auch von an die Zentralelektronik 1 angeschlossenen Komponenten durchführbar ist.

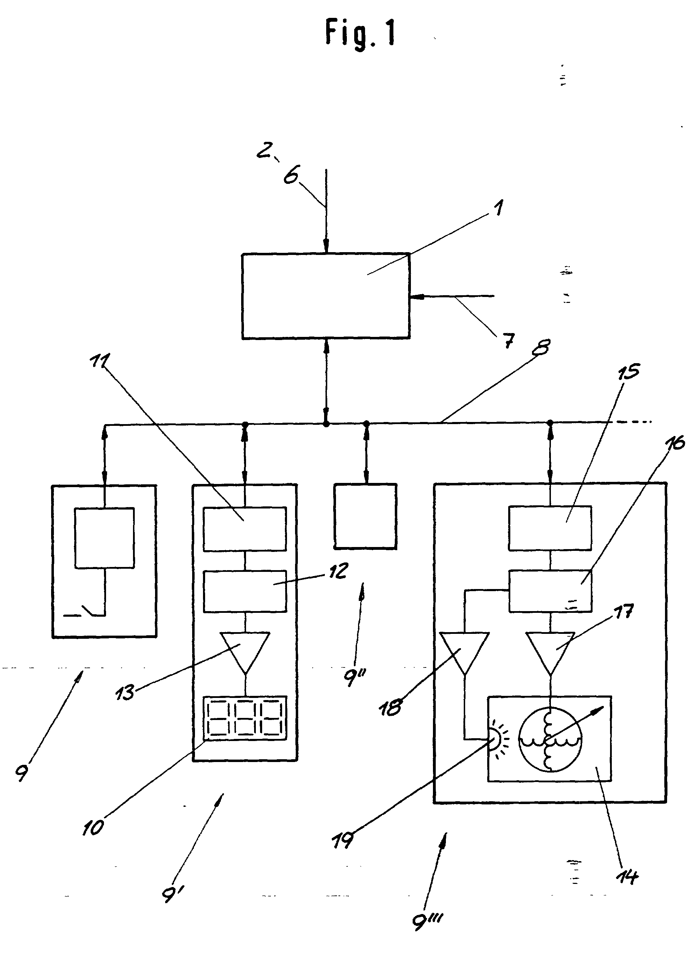

Wie Figur 1 zeigt, sind von der Zentralelektronik 1 über einen bidirektionalen seriellen Datenbus 8 Ansteuerdaten einer Mehrzahl von Komponenten 9, 9', 9'', 9''' zuleitbar. Über den gleichen Datenbus 8 werden auch Ausgabedaten der einzelnen Komponenten 9, 9', 9'', 9''' sowohl anderen der Komponenten 9, 9', 9", 9''' sowie der Zentralelektronik 1 zur Verarbeitung zugeleitet. Im Ausführungsbeispiel der Figur 1 ist die Komponente 9 ein manuell betätigbarer Schalter eines Bedienelements.
Die Komponente 9' ist ein LCD-Modul mit einer Siebensegmentanzeige 10, die von den Ansteuerdaten des Datenbusses 8 über eine Schnittstelle 11, eine Anpassungselektronik 12 sowie einen Treiber 13 ansteuerbar ist.

Die Komponente 9''' ist eine Anzeigeeinheit, die als Zeigerinstrument ausgebildet ist. Dabei wird ein Zeigerantriebssystem 14 von den Ansteuerdaten des Datenbusses 8 über eine bidirektionale serielle Schnittstelle 15, eine mit einem Rechner verbundene Anpassungselektronik 16 und einen Treiber 17 angesteuert.

Die Anpassungselektronik 16 führt dabei eine Dämpfung der übermittelten Ansteuerdaten und eine Pulsweitenmodulation der Ansteuerwerte für das Zeigerantriebssystem 14 durch.

Weiterhin erfolgt von der Ansteuerelektronik 16 über einen Treiber 18 eine Ansteuerung einer Lichtquelle 19 zur Beleuchtung der Anzeigeeinheit. Dabei werden von der Zentralelektronik 1 ausgegebene Einschalt- und Dimminformationen zur Ansteuerung der Lichtquelle 19 gebracht.

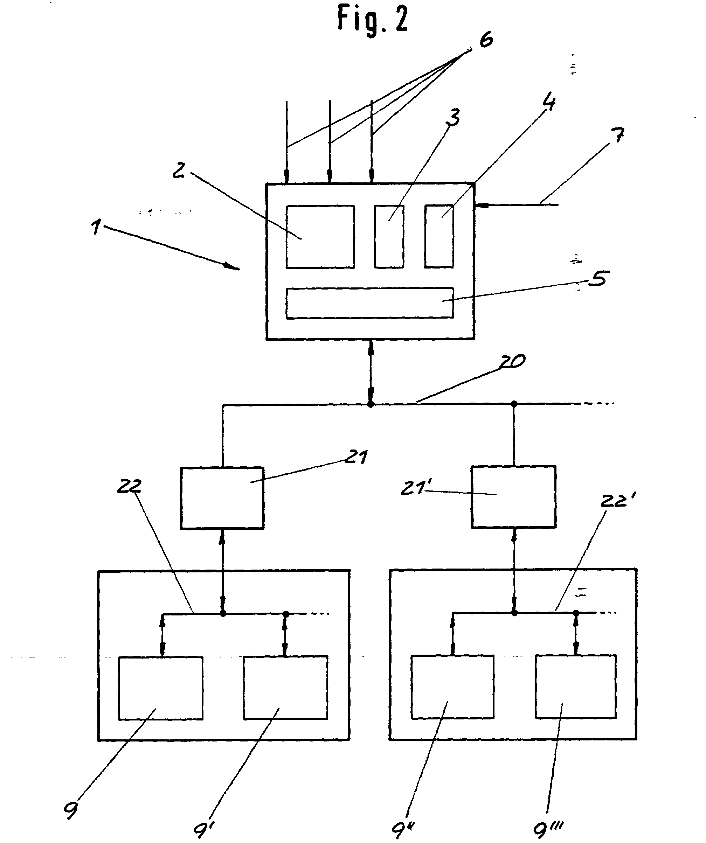

Bei dem Ausführungsbeispiel der Figur 2 werden ebenfalls Komponenten 9, 9', 9'' und 9''' durch Ansteuerdaten der Zentralelektronik 1 angesteuert. Dabei erfolgt die Ausgabe der Ansteuerdaten der Zentralelektronik 1 über einen Hauptbus 20 und mehrere mit dem Hauptbus 20 jeweils über ein Gateway 21, 21' verbundene Nebendatenbusse 22, 22'. An jeden Nebendatenbus 22 und 22' sind mehrere Komponenten 9, 9', 9", 9''' angeschlossen. Dabei ist der Hauptbus 20 ein Datenbus höherer übertragbarer Datenrate als die Nebendatenbusse 22, 22'.

Durch die Gateways 21, 21' werden aus den vom Hauptdatenbus 20 übermittelten Ansteuerdaten jeweils die Daten herausgefiltert, die nur dem dem jeweiligen Gateway 21 bzw. 21' nachgeordneten Nebendatenbus 22 bzw. 22' sowie den daran angeschlossenen Komponenten 9, 9' bzw. 9", 9''' zugeordnet sind.

Die Komponenten 9 - 9"'in Figur 2 können gleicher Art wie die Komponenten 9 - 9''' in Figur 1 sein.

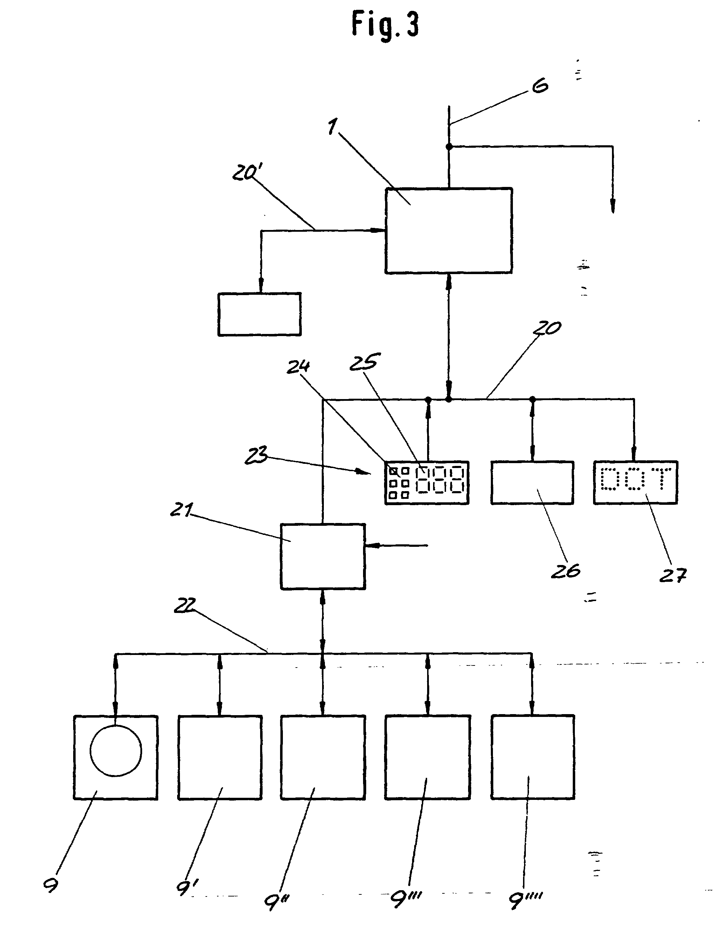

Bei den in Figur 3 dargestellten Ausführungsbeispiel sind über den von der Zentralelektronik 1 ausgehenden Hauptbus 20 und über ein Gateway 21 ein Nebenbus 22 und die daran angeschlossenen Komponenten 9, 9', 9'', 9''', 9'''' mit Ansteuerdaten ansteuerbar. Dabei können Gateway 21 und Komponenten 9-9'''' gleicher Art sein wie in den Figuren 1 und 2.

Außer dem über den Gateway 21 an den Hauptbus 20 angeschlossenen System aus Nebenbus 22 und Komponenten 9 - 9'''' sind an dem Hauptbus 20 weitere Systeme angeschlossen und werden mit Ansteuerdaten versorgt bzw. speisen Daten in den Hauptbus 20 ein.

Eines dieser Systeme ist eine Bedienebene 23 mit einem Tastenfeld 24 zur manuellen Einspeisung von Daten in den Hauptbus 20 sowie einem Anzeigefeld 25 zur Anzeige der Eingabedaten.

Ein weiteres System ist eine Klimaregeleinheit 26, der über den Hauptbus Ansteuerdaten zugeführt werden und die wiederum Rückmeldedaten in den Hauptbus 20 einspeist.

Ein drittes System beinhaltet eine weitere Anzeigeeinheit 27 mit einem Punkt-Matrix-Anzeigefeld.

Die Zentralelektronik 1 in Figur 3 ist gleichzeitig als Gateway ausgebildet und filtert die Daten heraus, die dem Hauptbus 20 zugeführt werden sollen.

Darüber hinaus werden auch Daten herausgefiltert, die einem weiteren Hauptdatenbus 20' und dem daran angeschlossenen Komponentensystem zugeführt werden. Dieses Komponentensystem kann einen ähnlichen Aufbau, wie das an den Hauptbus 20 angeschlossene Komponentensystem oder das an den Datenbus 8 angeschlossene Komponentensystem der Figur 2 aufweisen.

## Patentansprüche

1. Ansteuereinrichtung zum Ansteuern elektrischer und/oder elektronischer Komponenten eines Kraftfahrzeugs, mit einer Zentralelektronik (1), der über einen Dateneingang eine Mehrzahl Daten zuleitbar sind, die in der Zentralelektronik (1) verarbeitbar und von der über eine gemeinsame Leitung (8,20,20') einer Mehrzahl der Komponenten Ansteuerdaten zuleitbar sind, und wobei die gemeinsame Leitung ein bidirektionaler Datenbus (8, 20, 20') ist, über den Ausgabedaten der Komponenten (9 - 9"") anderen Komponenten (9 - 9"") und/oder der Zentralelektronik (1) zur Verarbeitung zuleitbar sind, **dadurch gekennzeichnet, daß** der Datenbus einen oder mehrere mit der Zentralelektronik (1) verbundene Hauptdatenbusse (20, 20') und mehrere mit jedem Hauptdatenbus (20, 20') jeweils über ein Gateway (21, 21') verbundene Nebendatenbusse (22, 22') aufweist, wobei an jedem Nebendatenbus ein oder mehrere Komponenten (9 - 9'''') angeschlossen sind.

2. Ansteuereinrichtung nach Anspruch 1, **dadurch gekennzeichnet, daß** der Datenbus (8, 20, 20') ein serieller Datenbus ist.

3. Ansteuereinrichtung nach einem der vorhergehenden Ansprüche, **dadurch gekennzeichnet, daß** der Datenbus aus mindestens einer zweiadrigen Leitung besteht, wovon eine Ader der Datenübertragung und deren andere Ader der Zuführung elektrischer Energie zu den Komponenten dient.

4. Ansteuereinrichtung nach einem der vorhergehenden Ansprüche, **dadurch gekennzeichnet, daß** die Leitung eine flexible Leitung ist.

5. Ansteuereinrichtung nach einem der vorhergehenden Ansprüche, **dadurch gekennzeichnet, daß** die Komponenten (9 - 9"") an beliebigen Stellen des Datenbusses (8, 20, 20') ankoppelbar sind.

6. Ansteuereinrichtung nach einem der vorhergehenden Ansprüche, **dadurch gekennzeichnet, daß** die Komponenten (9 - 9"") ein Empfangsteil zum Empfangen der Ansteuerdaten und/oder ein Sendeteil zum Senden der Ausgabedaten aufweisen.

7. Ansteuereinrichtung nach einem der vorhergehenden Ansprüche, **dadurch gekennzeichnet, daß** die Komponenten (9 - 9"") eine Schnittstelle (11, 15) zum Datenbus (8), eine Anpassungselektronik (12, 16) zum Aufbereiten der empfangenen Ansteuerdaten und einen Ansteuerteil (13, 17, 18) zum Ansteuern einer anzusteuernden Einheit aufweisen.

8. Ansteuereinrichtung nach einem der vorhergehenden Ansprüche, **dadurch gekennzeichnet, daß** die Zentralelektronik (1) eine Diagnoseschnittstelle (7) aufweist, über die eine Fehler- bzw. Plausibilitätsüberprüfung der Zentralelektronik (1) und/oder der Komponenten (9 - 9"") durchführbar ist.

9. Ansteuereinrichtung nach einem der vorhergehenden Ansprüche, **dadurch gekennzeichnet, daß** die Komponenten (9', 9''', 27) Anzeigemodule sind, die als anzusteuernde Einheiten Anzeigeeinheiten besitzen.

10. Ansteuereinrichtung nach Anspruch 9, **dadurch gekennzeichnet, daß** die Anzeigeeinheiten (9', 27) optoelektronische Anzeigeeinheiten sind.

11. Ansteuereinrichtung nach Anspruch 9, **dadurch gekennzeichnet, daß** die Anzeigeeinheiten (9''') Zeigerinstrumente sind.

12. Ansteuereinrichtung nach einem der vorhergehenden Ansprüche, **dadurch gekennzeichnet, daß** die anzusteuernde Einheit eine Lichtquelle (19) zur Beleuchtung einer weiteren anzusteuernden Einheit der Komponente (9''') ist.

13. Ansteuereinrichtung nach einem der Ansprüche 1 bis 8, **dadurch gekennzeichnet, daß** die Komponenten manuell betätigbare Dateneingabeeinheiten (23) sind.

14. Ansteuereinrichtung nach einem der Ansprüche 1 bis 8, **dadurch gekennzeichnet, daß** die Komponenten (9) manuell und/oder durch Stelleinheiten betätigbare Schalter sind.

15. Ansteuereinrichtung nach einem der Ansprüche 1 bis 8, **dadurch gekennzeichnet, daß** die Komponenten Sensoren sind.

16. Ansteuereinrichtung nach einem der Ansprüche 1 bis 8, **dadurch gekennzeichnet, daß** die Komponenten Beleuchtungseinheiten sind.

17. Ansteuereinrichtung nach Anspruch 1, **dadurch gekennzeichnet, daß** der Hauptdatenbus (20, 20') ein Datenbus höherer übertragbarer Datenrate ist als der Nebendatenbus (22, 22').

18. Ansteuereinrichtung nach einem der vorhergehenden Ansprüche, **dadurch gekennzeichnet, daß** dem Dateneingang (6) der Zentralelektronik (1) die Daten mittels eines Datenbusses zuführbar sind.

19. Ansteuereinrichtung nach Anspruch 18, **dadurch gekennzeichnet, daß** der Datenbus ein CAN-Bus ist.

20. Ansteuereinrichtung nach einem der vorhergehenden Ansprüche, **dadurch gekennzeichnet, daß** der Datenbus oder der Hauptdatenbus ein elektrische Signale übertragender Bus ist.

21. Ansteuereinrichtung nach einem der Ansprüche 1 bis 19, **dadurch gekennzeichnet, daß** der Datenbus oder der Hauptdatenbus ein Lichtsignale übertragender Bus ist.

22. Ansteuereinrichtung nach Anspruch 21, **dadurch gekennzeichnet, daß** der Lichtsignale übertragende Bus Lichtleiter als Übertragungsmedium aufweist.

## Claims

1. Drive device for driving electrical and/or electronic components of a motor vehicle, having a central electronic system (1) to which a plurality of data items, which can be processed in the central electronic system (1) can be fed via a data input, and by which drive data can be fed to a plurality of the components via a common line (8, 20, 20'), the common line being a bidirectional data bus (8, 20, 20') via which output data of the components (9-9'''') can be fed to other components (9-9'''') and/or to the central electronic system (1) for processing, **characterized in that** the data bus has one or more main databuses (20, 20') which are connected to the central electronic system (1) and a plurality of secondary databuses (22, 22') which are each connected to each main databus (20, 20') via a gateway (21, 21'), one or more components (9-9'''') being connected to each secondary databus.

2. Drive device according to Claim 1, **characterized in that** the databus (8, 20, 20') is a serial databus.

3. Drive device according to one of the preceding claims, **characterized in that** the databus is composed of at least one dual-conductor line, one conductor of which is used for transmitting data and the other conductor is used for supplying electrical power to the components.

4. Drive device as claimed in one of the preceding claims, **characterized in that** the line is a flexible line.

5. Drive device according to one of the preceding claims, **characterized in that** the components (9-9'''') can be coupled to any desired points on the databus (8, 20, 20').

6. Drive device according to one of the preceding claims, **characterized in that** the components (9-9'''') have a receiver part for receiving the drive data and/or a transmitter part for transmitting the output data.

7. Drive device according to one of the preceding claims, **characterized in that** the components (9-9'''') have an interface (11, 15) with the databus (8), an adaptation electronic system (12, 16) for conditioning the received drive data and a drive part (13, 17, 18) for driving a unit which is to be driven.

8. Drive device according to one of the preceding claims, **characterized in that** the central electronic system (1) has a diagnostic interface (7) via which error checking or plausibility checking of the central electronic system (1) and/or of the components (9-9'''') can be carried out.

9. Drive device according to one of the preceding claims, **characterized in that** the components (9', 9''', 27) are display modules which have, as the units which are to be driven, display units.

10. Drive device according to Claim 9, **characterized in that** the display units (9', 27) are opto-electronic display units.

11. Drive device according to Claim 9, **characterized in that** the display units (9''') are pointer instruments.

12. Drive device according to one of the preceding claims, **characterized in that** the unit to be driven is a light source (19) for illuminating a further unit, to be driven, of the component (9''').

13. Drive device according to one of Claims 1 to 8, **characterized in that** the components are data input units (23) which can be actuated manually.

14. Drive device according to one of Claims 1 to 8, **characterized in that** the components (9) are switches which can be actuated manually and/or by means of actuator units.

15. Drive device according to one of Claims 1 to 8, **characterized in that** the components are sensors.

16. Drive device according to one of Claims 1 to 8, **characterized in that** the components are illumination units.

17. Drive device according to Claim 1, **characterized in that** the main databus (20, 20') is a databus with a higher transmissible data rate than the secondary databus (22, 22').

18. Drive device according to one of the preceding claims, **characterized in that** the data can be supplied to the data input (6) of the central electronic system (1) by means of a databus.

19. Drive device according to Claim 18, **characterized in that** the databus is a CAN bus.

20. Drive device according to one of the preceding claims, **characterized in that** the databus or the main databus is a bus which transmits electrical signals.

21. Drive device according to any one of Claims 1 to 19, **characterized in that** the databus or the main databus is a bus which transmits light signals.

22. Drive device according to Claim 21, **characterized in that** the bus which transmits light signals has light guides as the transmission medium.

## Revendications

1. Dispositif de commande permettant de commander des composants électriques et/ou électroniques d'un véhicule automobile, comprenant une électronique centrale (1) à laquelle peuvent être envoyés, par l'intermédiaire d'une entrée de données, de multiples données qui peuvent être traitées dans l'électronique centrale (1) et parmi lesquelles des données de commande peuvent être envoyées à de multiples composants par l'intermédiaire d'une ligne (8, 20, 20') commune, la ligne commune étant un bus de données (8, 20, 20') bidirectionnel par l'intermédiaire duquel des données de sortie des composants (9 - 9"") peuvent être envoyées à d'autres composants (9 - 9"") et/ou à l'électronique centrale (1) en vue du traitement, **caractérisé en ce que** le bus de données comprend un ou plusieurs bus de données principaux (20, 20') reliés à l'électronique centrale (1) et plusieurs bus de données secondaires (22, 22') reliés à chaque bus de données principal (20, 20') respectivement par l'intermédiaire d'une passerelle (21, 21'), un ou plusieurs composants (9 - 9"") étant raccordés à chaque bus de données secondaire.

2. Dispositif de commande suivant la revendication 1, **caractérisé en ce que** le bus de données (8, 20, 20') est un bus de données série.

3. Dispositif de commande suivant l'une des revendications précédentes, **caractérisé en ce que** le bus de données est constitué d'au moins une ligne à deux conducteurs, dont un sert à la transmission de données et un autre à l'acheminement d'énergie électrique aux composants.

4. Dispositif de commande suivant l'une des revendications précédentes, **caractérisé en ce que** la ligne est une ligne souple.

5. Dispositif de commande suivant l'une des revendications précédentes, **caractérisé en ce que** les composants (9 - 9'''') peuvent être accouplés en des emplacements quelconques du bus de données (8, 20, 20').

6. Dispositif de commande suivant l'une des revendications précédentes, **caractérisé en ce que** les composants (9 - 9"") comportent une partie réceptrice servant à recevoir les données de commande et/ou une partie émettrice servant à émettre les données de sortie.

7. Dispositif de commande suivant l'une des revendications précédentes, **caractérisé en ce que** les composants (9 - 9"") comportent une interface (11, 15) vers le bus de données (8), une électronique d'adaptation (12, 16) servant à la mise en forme des données de commande reçues et une partie de commande (13, 17, 18) servant à commander une unité devant être commandée.

8. Dispositif de commande suivant l'une des revendications précédentes, **caractérisé en ce que** l'électronique centrale (1) comporte une interface de diagnostic (7) au moyen de laquelle un contrôle de défaillance ou de plausibilité de l'électronique centrale (1) et/ou des composants (9 - 9"") peut être effectué.

9. Dispositif de commande suivant l'une des revendications précédentes, **caractérisé en ce que** les composants (9', 9"', 27) sont des modules de visualisation qui comportent, en tant qu'unités devant être commandées, des unités de visualisation.

10. Dispositif de commande suivant la revendication 9, **caractérisé en ce que** les unités de visualisation (9', 27) sont des unités de visualisation opto-électroniques.

11. Dispositif de commande suivant la revendication 9, **caractérisé en ce que** les unités de visualisation (9''') sont des instruments à aiguille.

12. Dispositif de commande suivant l'une des revendications précédentes, **caractérisé en ce que** l'unité devant être commandée est une source de lumière (19) servant à éclairer une autre unité devant être commandée du composant (9'").

13. Dispositif de commande suivant l'une des revendications 1 à 8, **caractérisé en ce que** les composants sont des unités d'introduction de données (23) pouvant être actionnées manuellement.

14. Dispositif de commande suivant l'une des revendications 1 à 8, **caractérisé en ce que** les composants (9) sont des commutateurs pouvant être actionnés manuellement et/ou au moyen d'unités de réglage.

15. Dispositif de commande suivant l'une des revendications 1 à 8, **caractérisé en ce que** les composants sont des capteurs.

16. Dispositif de commande suivant l'une des revendications 1 à 8, **caractérisé en ce que** les composants sont des unités d'éclairage.

17. Dispositif de commande suivant la revendication 1, **caractérisé en ce que** le bus de données principal (20, 20') est un bus de données à débit de données transmissible plus élevé que le bus de données secondaire (22, 22').

18. Dispositif de commande suivant l'une des revendications précédentes, **caractérisé en ce que** les données peuvent être envoyées à l'entrée de données (6) de l'électronique centrale (1) au moyen d'un bus de données.

19. Dispositif de commande suivant la revendication 18, **caractérisé en ce que** le bus de données est un bus CAN.

20. Dispositif de commande suivant l'une des revendications précédentes, **caractérisé en ce que** le bus de données ou le bus de données principal est un bus transmettant des signaux électriques.

21. Dispositif de commande suivant l'une des revendications 1 à 19, **caractérisé en ce que** le bus de données ou le bus de données principal est un bus transmettant des signaux lumineux.

22. Dispositif de commande suivant la revendication 21, **caractérisé en ce que** le bus transmettant des signaux lumineux comporte des fibres optiques en tant qu'agent de transmission.
